(19) Europäisches Patentamt
European Patent Office
Office européen des brevets

(11) **EP 2 754 921 A2**

(12) **EUROPEAN PATENT APPLICATION**
published in accordance with Art. 153(4) EPC

(43) Date of publication:
**16.07.2014 Bulletin 2014/29**

(21) Application number: **12827056.8**

(22) Date of filing: **31.08.2012**

(51) Int Cl.:
**F16H 3/72** *(2006.01)*

(86) International application number:
**PCT/IB2012/054500**

(87) International publication number:
**WO 2013/030801 (07.03.2013 Gazette 2013/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.09.2011 CO 11112691**

(71) Applicant: **Universidad Industrial de Santander Bucaramanga (CO)**

(72) Inventors:
• **CORREA CELY, Carlos Rodrigo Bucaramanga (CO)**

• **LEYVA RICARDO, Jhony de Jesus Bucaramanga (CO)**
• **BERNATE IZQUIERDO, Gisell Bucaramanga (CO)**

(74) Representative: **ABG Patentes, S.L.
Avenida de Burgos, 16D
Edificio Euromor
28036 Madrid (ES)**

(54) **CONTINUOUSLY VARIABLE TRANSMISSION (CVT) DEVICE CONTROLLED BY A GEARED MOTOR**

(57)    The present invention consists of the use of a control rotary actuator coupled to a worm gear mechanism for changing the transmission ratio by varying the speed of the crown of the epicyclic gear mechanism. The claimed CVT is characterized by a combined mechanical system with a low power motor, which serves as a positioner. The design of the present invention is based on the use of a rotary control actuator worm gear instead of traditional continuously variable transmission pulleys or the continuously variable toroidal transmission, in order to modify the transmission ratio by varying the speed of the epicyclic crown mechanism. This continuously variable transmission does not require any clutch to vary the gear ratio or transmission throughout its operating range. The present invention does not use intentional friction forces in order to transmit the input power to the output of the existing forces, distinguishing itself from what already exists which are based on high frictional forces as a means to transmit torque or speed.

FIG. 2

**Description**

**FIELD OF THE INVENTION**

The invention of the present application is related to a new prototype of a continuously variable transmission (CVT) directed to be part of systems requiring the adjustment of position, speed or acceleration as in automotive applications, industrial robotics, computer numerical control machine tools, industrial equipment such as extruders or injectors and power generation plants. Among these potential applications for the claimed invention, there is the speed control of a motor vehicle, in which by using a CVT, it allows the combustion engine to maintain its most efficient performance point, by varying the speed of the vehicle and by varying the transmission ratio.

**BACKGROUND OF THE INVENTION**

At least five main reasons have been identified, accepted worldwide, justifying the research and development of continuously variable transmissions whatever their conceptual basis is: fuel economy, decrease of negative environmental impact, comfort for the user, obtaining the maximum engine performance at all times and functional simplicity. The main obstacles facing the development of these transmissions have also been clearly identified: a high technology required for manufacturing, new materials as metal alloys or lubricants resulting in higher initial costs and maintenance.
Among different types of CVT available are the hydrostatic transmissions, the ones based on friction and Ratcheting CVT. Hydrostatic CVTs consist of a hydraulic pump of positive displacement, a hydraulic variable displacement engine and flow control system of the hydraulic engine. They basically consist of varying the volumetric capacity of the hydraulic engine in order to maintain a constant flow in the pump, and vary the engine rotation speed. Such transmissions are expensive because they require hydraulic control elements as pressure regulators and position control servo valves, unlike the claimed transmission, which does not comprise any element of hydraulic nature.
The Ratcheting CVTs as the one disclosed in WO 99/15812, do not rely on friction for their operation. It highlights significant improvements in both the theoretical conception and practical realization with regard to existing transmission systems based on friction mechanisms. In said invention, the transmission ratio continuously varies linearly from 0 to 1, there are no friction elements that reduce the torque transmission efficiency and is completely mechanical. Similarly, there is no need to engage or disengage in order to vary the transmission ratio. It is based on oscillating mechanisms and uses three subsystems, one for converting the oscillating circular motion, the other to vary the amplitudes of the oscillations and the other to change the oscillating motion into a circular one. They have a ratchet mechanism that successively engages and disengages the driver system from the driven system producing an intermittent motion. The transmission ratio is adjusted by changing the coupling geometry within the oscillating elements. However, such transmissions are bulky, heavy and have a large number of mechanical elements, which makes it more vulnerable to failure. In contrast, the claimed transmission has only two subsystems with few parts with a compact design such as gears, shafts and worm gears.
Finally, transmissions based on friction, which exert strong pushing forces for transmitting the frictional force developed. Within this group are the toroidal and removable pulleys. The toroidal CVTs as the one disclosed in JP6185590, the energy is transmitted between two discs by means of two rollers, which can alter the points of contact with the discs and so the turning radius. By varying the position of the rollers, a continuous and smooth gear change can be achieved. When the rollers are inclined towards the center of the motor disk, the greater the speed reduction is achieved and when they tilt in the opposite direction, this ratio decreases. These CVTs use the friction force to transmit power between their elements. This exhibit a major drawback, as it only can take a small percentage of the total force available, which is determined by the friction coefficient. By increasing the loads applied to the elements subjected to contact stresses, stronger materials are required which drastically reduces the life of the components. Moreover, they cannot transmit high torques and it is usually presented a superficial wear phenomenon called "pitting." This is due to fatigue failure caused by intense stress of surface contact present in the material due to the typical forces, which are necessary to transmit the torque. As a result of the above, it would have an adverse increase in the initial cost and operating cost due to increased frequency of replacement of parts. In contrast, the present invention does not face any limit torque capacity, since it does not use friction to transmit power between the elements, providing easy maintenance due to the reduced number of parts and simplicity of the same.
Other types of CVTs based on friction are separable pulleys CVT, as in the case of the U.S. Patent 6,068,564. These are formed by a pair of adjustable diameter pulleys and a metal belt. The document is based on the concept of cutting a pulley into two parts, one side is fixed and the other is movable. Varying the distance between the pulleys, the metal strip is embedded at different radial positions around the axis of rotation and thus the transmission ratio is changed. These bands consist of many links carefully adjusted to a range of steel bands. By exerting a great strain on the metal band, the links are pressed against the pulleys and it is possible to transmit the torque due to the friction developed between the elements. These transmissions have problems of reliability due to the number of elements of the chain and due to friction, which incurs the same problems as in the toroidal case. In both cases separable toroidal and pulleys, due to the big pushing forces involved, it is necessary the use of high hydraulic pressure devices and servo - hydraulic control systems. Since the working pressure usually exceeds 50 bars, hydraulic losses are present, which generates a significant decrease in the total transmission efficiency. The present invention does not require complex mechanisms or high pressure hydraulic systems to control the transmission ratio, thus avoiding power losses present and inherent to the technology used, thereby reducing operating costs, manufacturing and maintenance.

Another transmission used is the one described in WO 95/14183, in which an epicyclic mechanism is combined with a toroidal CVT. This configuration is used because the two speed inputs of planetary system require high torques, reason why an input is directly connected to the combustion engine and the other to a toroidal CVT which is driven in turn by an engine bypass. Such CVT has the disadvantage of being more complex and its cost increments due to the specific components it has, contrary to the claimed CVT of the present invention which is conceptually simpler and wherein a worm gear is used driven by a control rotary actuator, in which the net torque present in the screw shaft is minimized in order to decrease the power required to vary the speed ratio.

Furthermore, document WO2010/053920 A2 describes a CVT that uses no clutch or torque converter. In this document, a planetary system controlled by an electric motor for varying the transmission ratio is used, wherein the system is directly connected by means of a gear. However, the power required for this electric engine is similar to the power of the combustion engine due to the high torque generated in the epicyclic mechanism. In contrast, the object of the claimed invention has a mechanism of worm gear, which allows the reduction of the required power and does not require clutching or disengage bearing in order to vary the speed at the exit in a continuous range, eliminating the steady loss of energy due to friction of the clutch plate and thus the high temperatures that requires the presence of a lubricant capable of maintain its viscosity against high temperatures.

In general, systems such as manual transmissions and conventional automatic transmissions are heavier and contribute to the total weight of the system. Furthermore, they are only able to allow discrete change ratios. For the specific automatic transmission cases, these are inefficient due to the requirements of the hydraulic system used for the gearshift requiring high power in order to maintain or achieve the pressure of the hydraulic fluid even in cases where it is not required any change of speed. From above, one can conclude that a system requiring a transmission for different speeds or power, it is desirable to have a continuously variable transmission with improved efficiency, a continuous range of variation of changes of speed and size as well as a reduced weight. Likewise, it is desirable that the new device does not require specialized technology, both for the manufacture and for maintenance.

## BRIEF DESCRIPTION OF THE INVENTION

The CVT of the present invention consists in the use of a control rotary actuator coupled to a control worm gear mechanism for changing the transmission ratio by varying the speed of the crown of the epicyclic gear mechanism. The present invention may be used on any apparatus that requires a transmission to decrease, maintain, increase or transmit power, and likewise to decrease, maintain or increase speed in a continuous manner, thereby decreasing the energy loss than the energy used when the conventional transmission is used. The claimed CVT is characterized by being a combined mechanical system with a low power engine, which serves as a positioner, this motor being one of its main differences with the continuously variable transmissions described in the prior art. The concept design of the present invention is based on the use of a rotary control actuator worm gear instead of the traditional continuously variable transmission pulleys or the toroidal continuously variable transmission, to modify the transmission ratio by varying the speed of the crown epicyclic mechanism. This continuously variable transmission does not require any clutch to vary the gear ratio or transmission throughout its operating range. Due to its design, the claimed invention does not use intentional friction forces in order to transmit the input power to the output, distinguishing from the existing transmissions which are based on high friction forces as a medium to achieve the transmission of torque or speed. That is, in the claimed invention, it does not exist frictional forces between the elements that impede or facilitate the transmission of power or speed from an engine plant to its output such as a traction system, which are different to those caused by the existing natural contact between gears, pinions, worm gears, etc.

By selecting a suitable helix angle of the worm gear, a compensation of the torque is achieved due to the tangential component of the normal pushing force present in the helix of the worm with the frictional torques that appear due to the teeth friction and bearings thrust. As a result, the high torque present in the gearwheel mechanism is maintained by the self-locking action of the worm gear, while the tangential force of the wheel deviates axially to the structure along the worm gear. This allows the control of the worm gear by a control rotary actuator that has a much lower power than the main rotary actuator. The above features open a wide range of applications for this invention mainly in computerized numerical control machines of multiple freedom degrees, but more extensively in automotive applications, where reliability, cost and ease of maintenance is very important.

The present invention has the following advantages:

EP 2 754 921 A2

- • Does not have a torque capacity limit.
- • Does not require a clutch.
- • Provides a better dynamic response than that observed in a typical main engine.
- • Cheap maintenance.
- • Provides flexibility regarding the type of control rotary actuator, being able to obtain a faster response when attached to a servomotor, and greater flexibility when a DC engine is used.
- • Does not require complex mechanisms or hydraulic systems.

**BRIEF DESCRIPTION OF THE DRAWINGS**

FIG.1 cross sectional view of the device without its casing.
FIG.2 three-dimensional exploded view of the device indicating its main components.
FIG.3 kinematic scheme of the preferred embodiment of the invention.
FIG.4 shows a first alternative configuration of the present invention.
FIG 5 shows a second alternative configuration of the present invention.
FIG.6 shows a third alternative embodiment of the present invention.
FIG.7 shows a fourth alternative embodiment of the present invention.
FIG.8 shows a fifth alternative embodiment of the present invention.
FIG.9 shows a sixth alternative configuration of the present invention.
FIG.10 shows a seventh alternative embodiment of the present invention.
FIG.11 shows an eighth alternative configuration of the present invention.
FIG.12 shows a ninth alternative embodiment of the present invention.
FIG.13 shows a tenth alternative embodiment of the present invention.
FIG.14 shows an eleventh alternative embodiment of the present invention.
FIG.15 shows a twelfth alternative embodiment of the present invention.
FIG.16 shows a thirteenth alternative configuration of the present invention.

**LIST OF ELEMENTS**

The list of items is described as follows:

1 Input shaft
2 Planetary shaft
3 Planetary shaft
4 Control shaft
5 Output shaft
6 Sun
7 Planet of the first stage
8 Planet of the first stage
9 Planet of the second stage
10 Planet of the second stage
11 Crown of external teeth
11' Crown of internal teeth
12 Gear wheel connected to the arm
13 Output gear
14 Gear wheel of the worm mechanism
15 Arm
16 Worm gear
17 Control rotary actuator
18 Gear input shaft.

**DETAILED DESCRIPTION OF THE INVENTION**

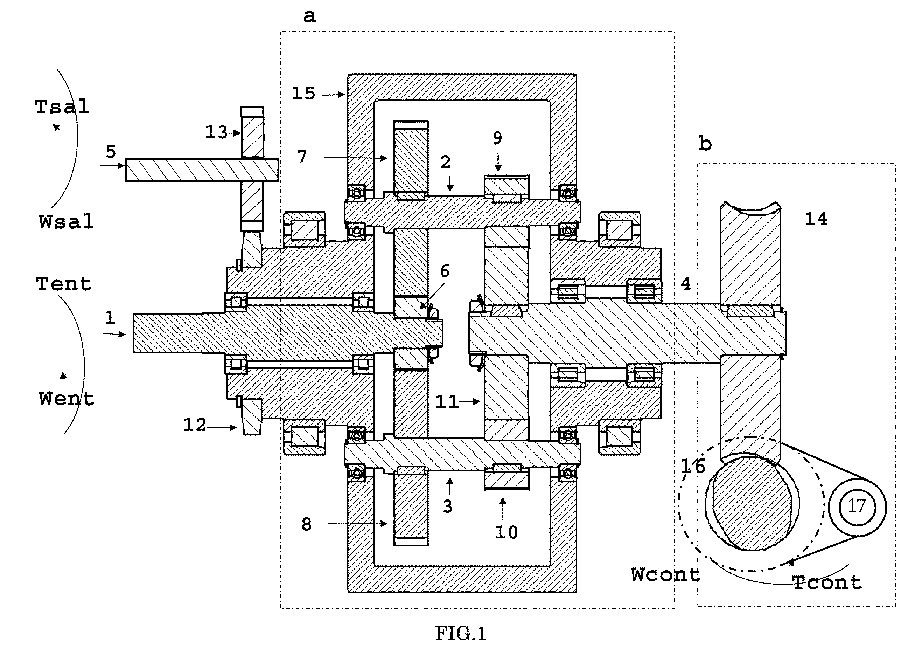

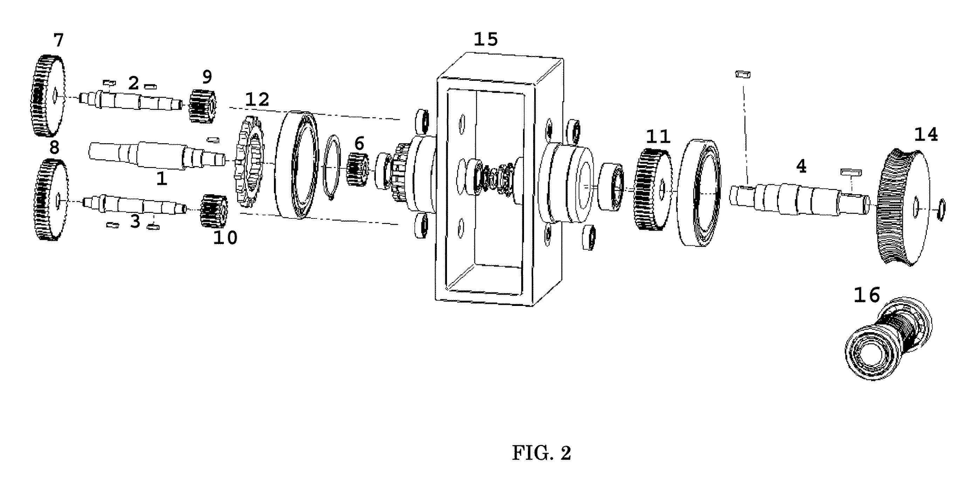

The present invention describes the design of a new continuously variable transmission prototype that simplifies the concept design and controllability of a CVT and exhibit advantages over the prior art. The present invention requires two external power entries, a main rotary actuator (not shown in the figures) and a control rotary actuator 17. The system, which a preferred embodiment is shown in FIG.1 and an exploded view in Figure 2, consists merely of two subsystems as described below:

a. A planetary or epicycloidal gear system, as shown in FIG.1, is provided such that its two velocity inputs are through the sun 6 and worm 11, and the output is through the planetary carriers or arm 15. Their function is to diminish the speed input in crown 11 and sun 6 affected by a weighting constant that depends on the teeth relationship per stage between the driven gear and the driver (m), as shown in equation (1):

$$\omega_{15} = \left(\frac{-1}{m^2-1}\right) \cdot \omega_6 + \left(\frac{m^2}{m^2-1}\right) \cdot \omega_{11}$$

$$\omega_{15} = -a \cdot \omega_6 + b \cdot \omega_{11} \qquad \text{(Equation 1)}$$

Where:

$\omega_{15}$: Angular speed of the arm.
$m$ : Teeth relationship per stage between the driven gear and the driver.
$\omega_6$: Angular speed of the sun.
$\omega_{11}$: Angular speed of the worm.

From the above equation, it develops the relationship of the angular speed ratio of the transmission of the epicicloydal system RV as (see Equation 2):

$$RV = \frac{\omega_6}{\omega_{15}} = \frac{1}{-a + b \cdot \dfrac{\omega_{11}}{\omega_6}} \qquad \text{(Equation 2)}$$

It is noted how the speed relationship can assume a continuous range of variation depending on the speed of the worm.
b. A control rotary actuator 17, which in the case of the preferred embodiment is a gear motor coupled to the worm gear mechanism, which is intended to exert the control action on the speed transmission relationship by regulated variation in the worm gear 16.

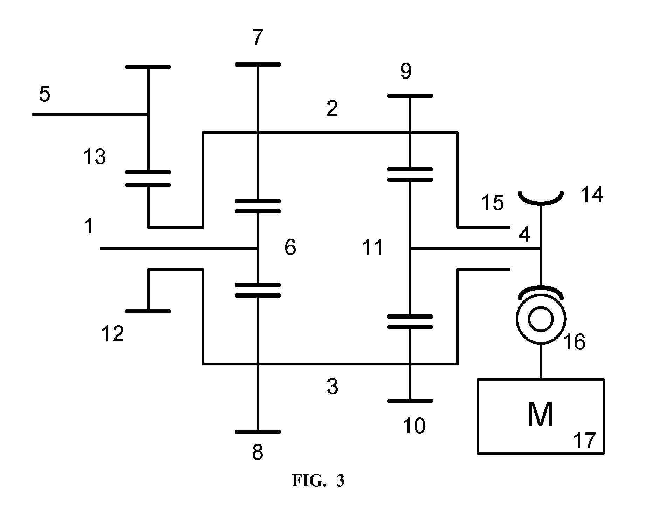

In the preferred embodiment, detailed in FIG.1 and shown in a schematic view in FIG.3, the system allows changing the angular speed of the output in the shaft 5 by means of the action over the angular speed in the worm gear 16. The transmission maintains a high torque on the output shaft 5 through the self-locking action of the worm gear 16 and has control over the output angular speed due to the additive action of the input angular speeds of the sun 6 ($\omega_6$) and crown 11 ($\omega_{11}$) of the epicyclic mechanism. With a properly designed helix angle, the net torque on the worm gear 16 is minimized, allowing the use of a control rotary actuator 17 of a much lower power than the main actuator given by the input angular velocity ($\omega_{ent}$) and the torque input ($T_{ent}$). The reduction of the torque in the worm gear 16, as well as a lower inertia equivalent in the axis of the control shaft 4, allows to obtain a better dynamic response than that of the main actuator which is connected to the input shaft 1. As a result, a transmission with a torque on the output shaft is obtained compared to the input torque ($T_{ent}$), but having the own dynamic characteristics of the control rotary actuator 17.
The system receives the power through the axis 1, which drives the sun 6 of the planetary system and transmits power to the shafts 2 and 3 by means of the planetary 7 and 8. The planetary 9 is jointed with the shaft 2 and rotates at the same speed as the planet 7. Similarly, the planetary 10 is coupled to the planetary 8 by means of the shaft 3 to which it is coupled. Shafts 2 and 3 are supported by bearings in the arm 15 and can freely rotate relative thereto. Planetary 9 and 10 are coupled to the worm 11, which is jointed to the gear wheel 14 through the shaft 4. The gear wheel 14 meshes with the worm gear 16, which is driven by a control rotary actuator 17. The angle of the screw is designed so as to meet various design constraints:

1. The worm gear mechanism, comprised by the worm gear 16 and the gear wheel or crown 14, must be self-locking and rotates in a direction such that the condition of lowering torque is present, similar to what happens in the case of power gears, which is a condition in which the movement is performed in the same direction in which the force tends to be applied. Thus, although the worm gear 16 is found rotating at constant speed, the effect on the crown 11 of the epicyclic train will be equivalent to when it is anchored to the structure.

2. The angle should be such as to minimize the net torque on the worm gear 16. When all torques applied to the worm gear are in equilibrium, a small drive of the control rotary actuator momentarily removes the worm gear from its position of balance and it may rotate but maintaining the applied forces.

3. For this design, the sliding speed between the helix of the worm gear 16 and the wheel teeth 14 is minimal, so that the foregoing requirements are met.

Under these conditions, the torque applied to the sun 6 is transmitted to the crown 11 through the planetary shafts 2 and 3. However, since the crown 11 behaves as if anchored to the structure, the torque is re-driven to the arm through the planetary shafts 2 and 3 through a leverage effect. This leverage effect is created because of the involvement of a point of load application (contact point between the sun 6 and the planetary 7), a reaction point (supporting point of the shaft 2 in the arm 15) and a pivot (point of contact between the planetary 9 and crown 11). So the torque applied to the output shaft 5 is correlated with the torque available from the input shaft 1, whenever the control shaft 4 is turning in a condition of self-locking balance through worm gear mechanism, meeting the previously described restrictions.

## ALTERNATIVE SYSTEMS

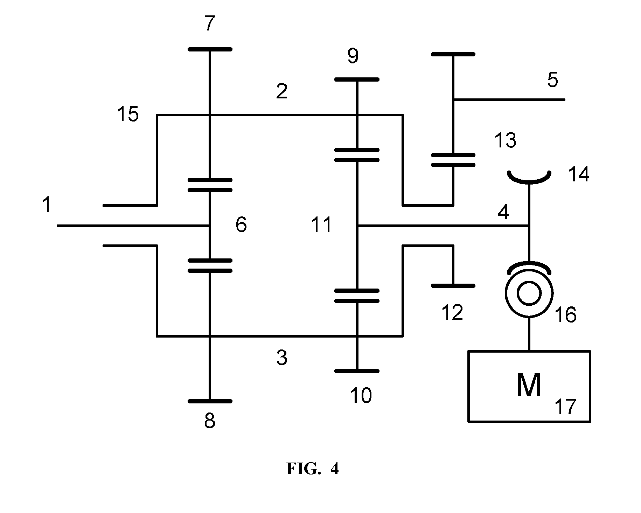

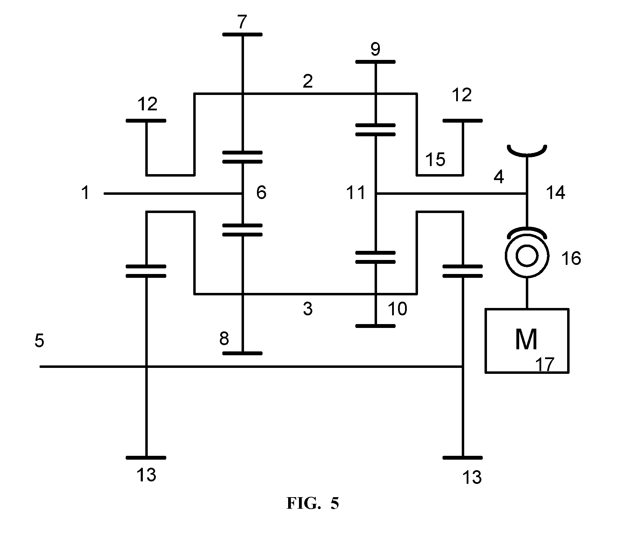

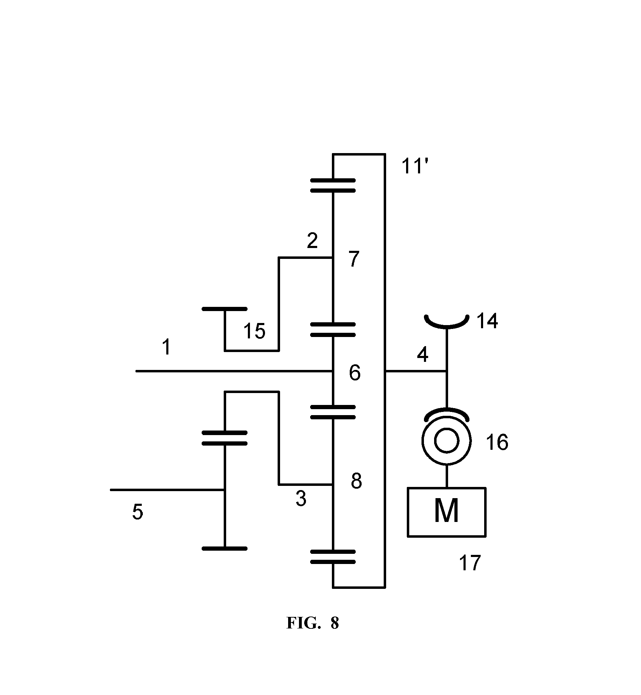

Based on the same principles of the configuration shown as the preferred embodiment of the present invention in FIG.1, alternative mechanisms can be obtained in which the various versions of the proposed mechanism are obtained when an alternative configuration of the planetary gear is used. FIGS. 4 to 16 show the scheme for each configuration or alternative mechanism. Another embodiment of the present invention is considered as any planetary gear system disposal in which one of the inputs of the epicyclic gear system is driven by a control rotary actuator 17 and the worm gear mechanism, and the other is connected to the actuator that supplies the main power to the machine or device. Therefore, three subgroups of Alternative Systems I, II and III are achieved, depending on the axis defined as the system output.

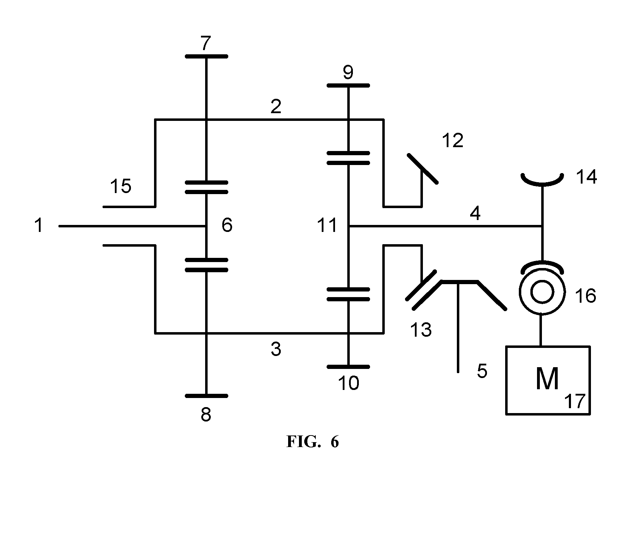

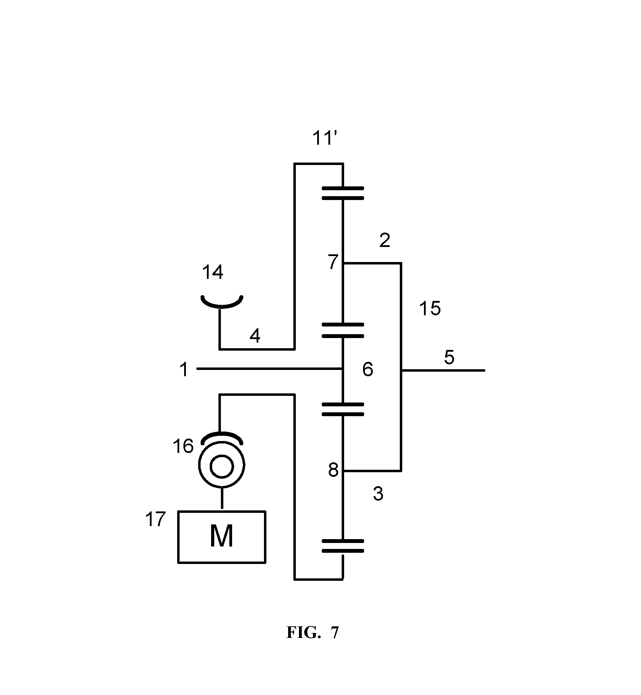

■ Alternative systems I: Corresponds to FIGS. 4 to 8. Correspond to alternative systems in which the arm 15 is provided as an output of the planetary system. FIGS. 4 and 6 show the configuration for dual-stage train comprising a sun 6 and 2 planetary groups comprising gears 7, 8, 9 and 10. FIGS. 7 to 8 illustrate variations of the configuration for a single stage train, in which the different ways of arranging the output shaft 5 and its connection to the sun 6 are shown, whether it is used as a crown with internal teeth 11' or external teeth 11 or different ways of coupling the wheel 14 of the worm gear mechanism with the planetary system.

In the configuration for a single stage train, the torque applied at the input shaft 1, which drives the sun 6, is transmitted to the crown of internal teeth 11' through the two planetaries 7 and 8. Given that the crown 11' behaves as if anchored to the structure, the torque is re-driven to the arm 15 through the shaft 2 and 3 by a leverage effect.

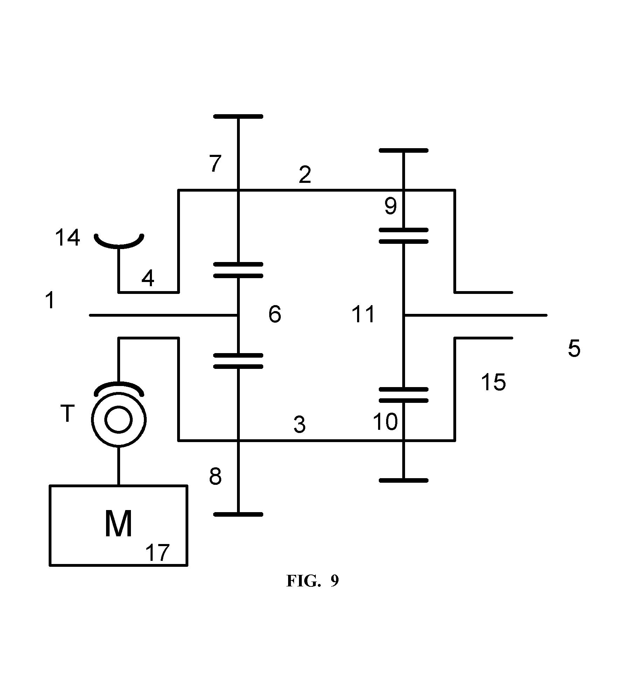

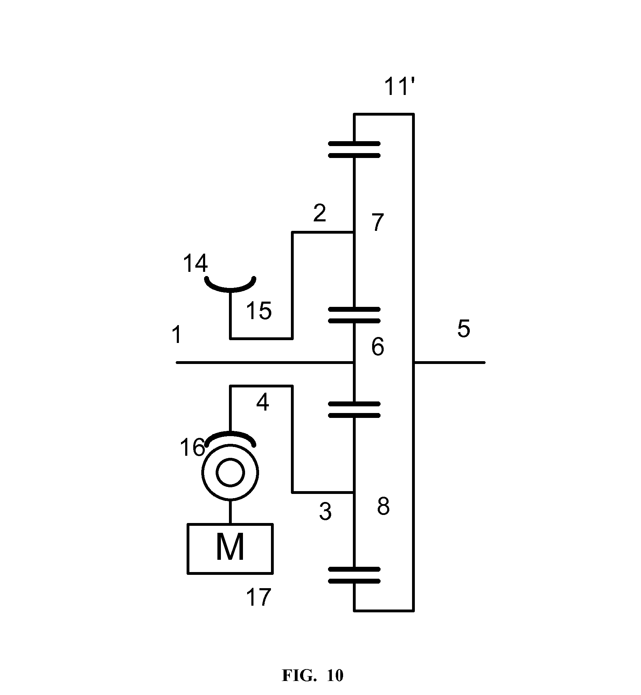

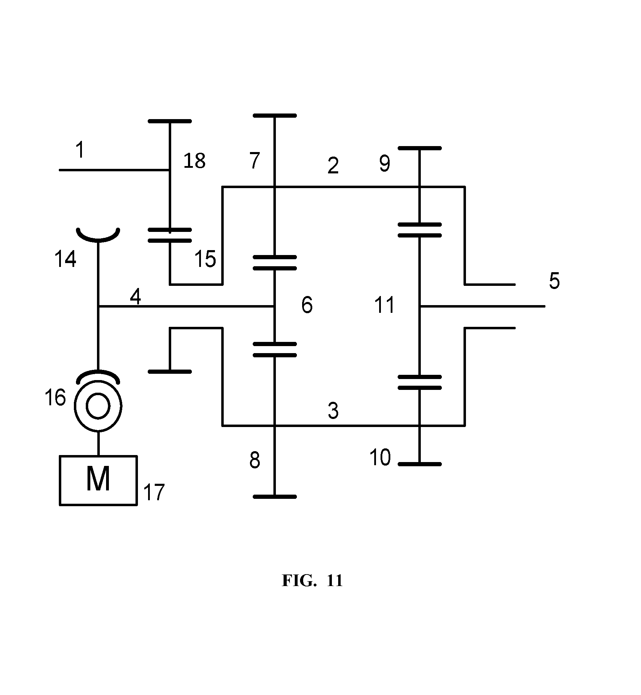

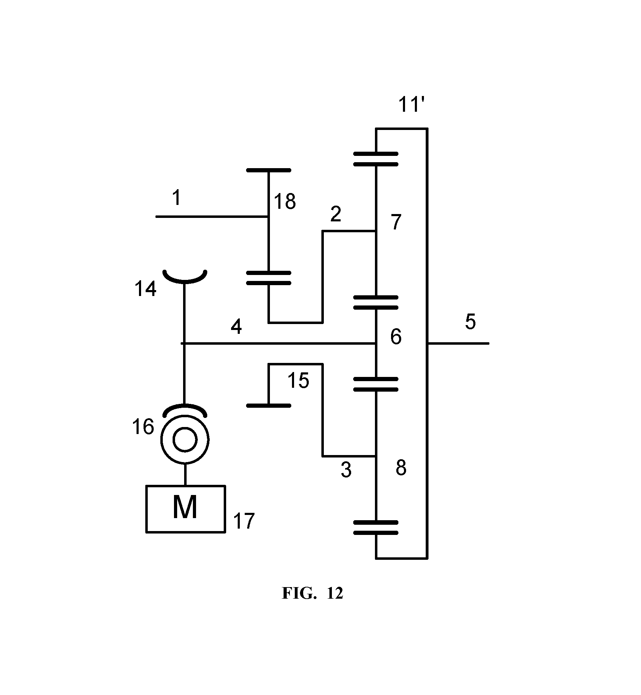

■ Alternative systems II: In FIGS. 9 to 12 the output of the transmission by the crown 11 is disposed. The entry to the system may be through the sun 6 (FIGS. 9 and 10) or through the arm 15 (FIGS. 11 and 12). In each case, the figures show the settings for the case with external gear teeth 11 and internal gear teeth 11' teeth.

In the configuration for the single stage train of FIG. 10, the torque applied to the input shaft 1 is transmitted to the sun 6. This torque is transmitted in turn from the sun 6 to the planetary 7 and 8 and then redirected to the crown 11'. In an additional configuration, FIG 12, the applied torque in 1 is transmitted to the arm 15 by means of the gear input shaft 18. The arm 15 then transmits the torque to the planetary 7 and 8 by means of the shafts 2 and 3. As a result of the worm gear, the sun 6 is anchored, allowing the torque of the input shaft 1 to the crown 11' is transmitted and this in turn is transmitted to the output shaft 5.

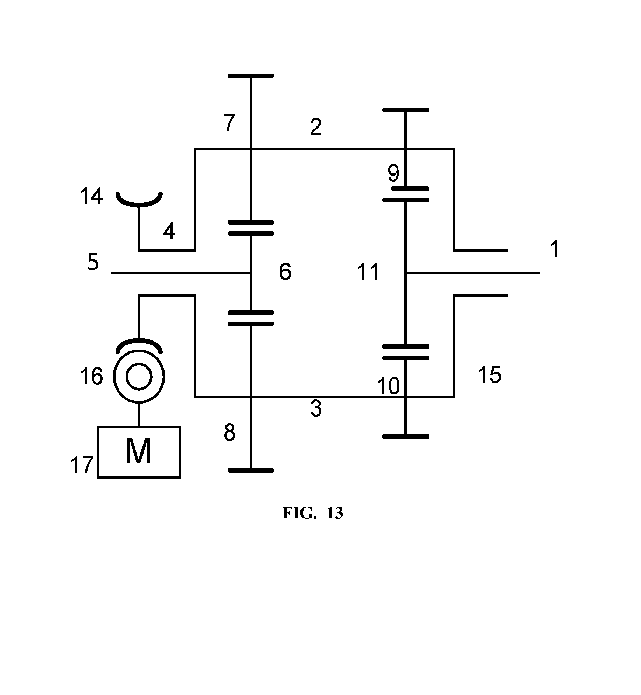

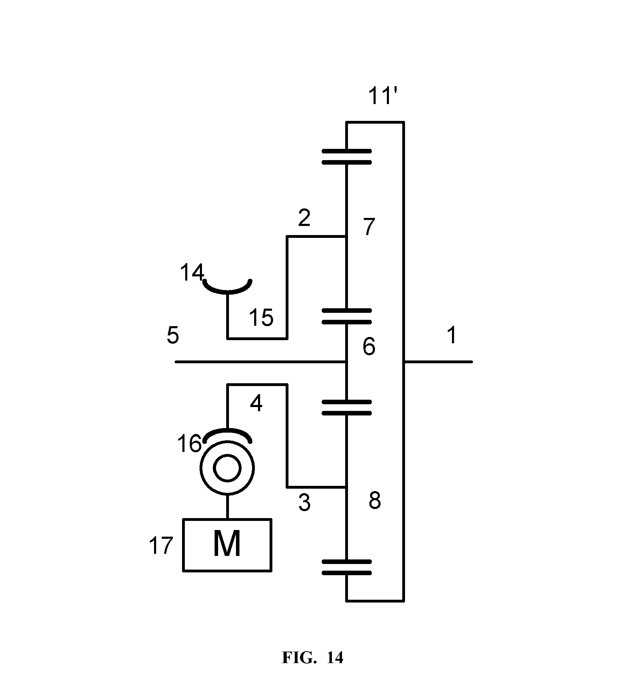

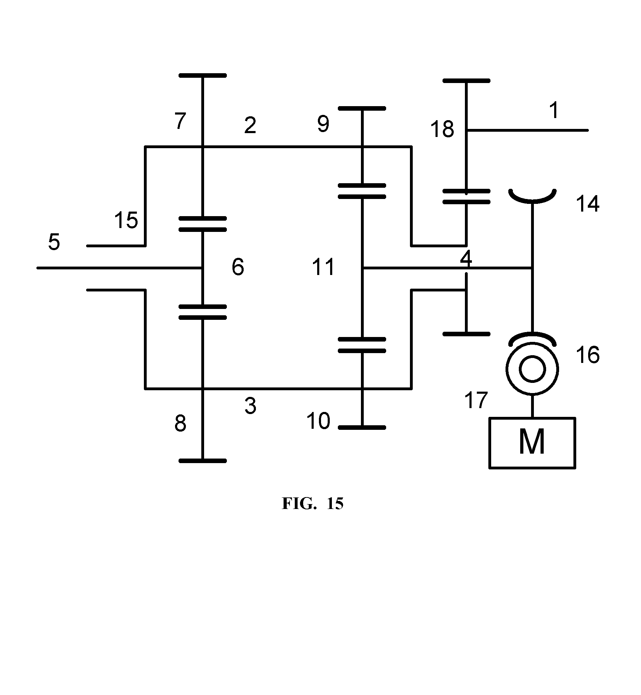

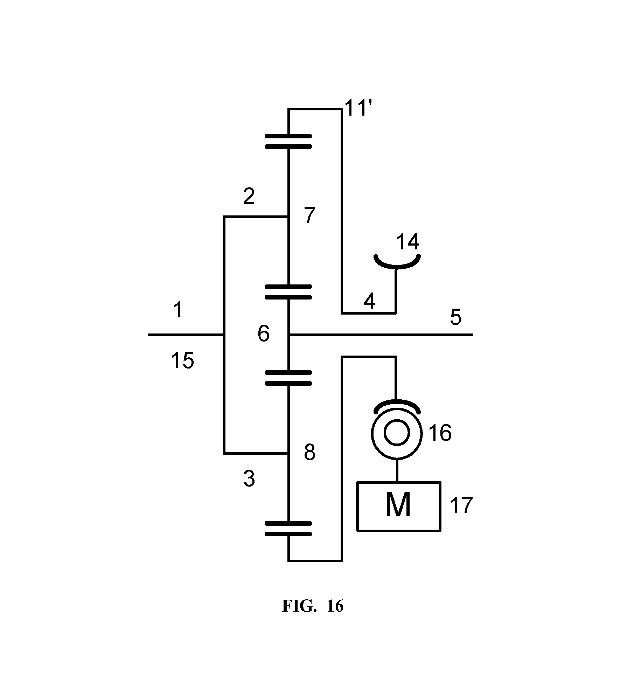

■ Alternative systems III: Figs. 13 to 16 show the case when the output of the epicyclic gear system is through the sun 6. In FIGS. 13 and 14 the control is exerted over the input arm 15, and the input of the planetary system is through the crown. The first case with external teeth on the crown 11 and the second with internal teeth 11'. FIGS. 15 and 16 illustrate the case for one input through the control arm 15 and the crown 11. FIGS 13 and 15 show the cases for external teeth, while FIGS 15 and 16 illustrate the case for internal gear teeth 11h.

**Claims**

1.  A device of a continuously variable transmission (CVT), **characterized by**:

    - a power input shaft 1;
    - a power output shaft 5;
    - an epicyclic gear system operatively connecting the power input shaft 1 and the power output shaft 5;
    - a control shaft 4 operatively connected, at one end, to the epicyclic system, and at the other end, to the gearwheel 14 which is operatively connected to a worm gear 16 which is driven by a control rotary actuator 17.

2.  A CVT according to claim 1, wherein the control rotary actuator 17 is a DC motor.

3.  A CVT according to claim 1, wherein the helix angle of worm gear 16 has a self-locking function.

4.  A CVT according to claim 1, wherein the epicycloidal system is **characterized by**:

    - a sun 6;
    - an arm 15;
    - a first shaft 2 connected to planetary gears 7 and 9;
    - a second shaft 3 connected to planetary 8 and 10;
    - a crown 11;

    wherein the sun 6 is operatively connected to the shafts 2 and 3 through the planetary gears 7 and 8, respectively; wherein the crown 11 is also operatively connected to the shafts 2 and 3 through the planetary gears 9 and 10; and wherein the shafts 2 and 3 are operatively connected to the arm 15.

5.  A CVT according to claim 4, wherein the crown 11 is jointed to the worm gear 14 by means of the control shaft 4.

6.  A CVT according to claim 5, wherein the power input shaft 1 is operatively connected to the sun 6 and the output shaft 5 is operatively connected to the arm 15.

7.  A CVT according to claim 5, wherein the power input shaft 1 is operatively connected to the arm 15 and the output shaft 5 is operatively connected to the sun 6.

8.  A CVT according to claim 4, wherein the arm 15 is jointed to the worm gear 14 by means of the control shaft 4.

9.  A CVT according to claim 8, wherein the power input shaft 1 is operatively connected to the sun 6 and the output shaft 5 is operatively connected to the crown 11.

10. A CVT according to claim 8, wherein the power input shaft 1 is operatively connected to the crown 11 and the output shaft 5 is operatively connected to the sun 6.

11. A CVT according to claim 1, wherein the epicycloidal system is **characterized by**:

    - a sun 6;
    - a first shaft 2 connected to a planetary 7;
    - a second shaft 3 connected to a planetary 8;
    - an arm 15;
    - a crown 11;

    wherein shafts 2 and 3 are operatively connected to the arm 15;
    wherein the sun 6 is operatively connected to shafts 2 and 3 through the planetary 7 and 8, and,
    where planetary 7 and 8 in turn are operatively connected to the gear teeth, which can be external 11 or internal teeth 11'.

12. A CVT according to claim 11, wherein the crown 11 is jointed to the worm gear 14 by means of the control shaft 4.

13. A CVT according to claim 12, wherein the power input shaft 1 is operatively connected to the sun 6 and the output shaft 5 is operatively connected to the arm 15.

14. A CVT according to claim 12, wherein the power input shaft 1 is operatively connected to the arm 15 and the output shaft 5 is operatively connected to the sun 6.

15. A CVT according to claim 12, wherein the arm 15 is jointed to the worm gear 14 by means of the control shaft 4.

16. A CVT according to claim 15, wherein the power input shaft 1 is operatively connected to the sun 6 and the output shaft 5 is operatively connected to the crown 11.

17. A CVT according to claim 15, where the power input shaft 1 is operatively connected to the crown 11 and the output shaft 5 is operatively connected to the sun 6 of the epicycloidal system.

18. A CVT according to claim 11, where the sun 6 is jointed to the worm gear 14 by means of the control shaft 4.

19. A CVT according to claim 18, wherein the power input shaft 1 is operatively connected to the arm 15 and the output shaft 5 is operatively connected to the crown 11.

FIG.1

FIG. 2

**FIG. 3**

FIG. 4

**FIG. 5**

FIG. 6

FIG. 7

**FIG. 8**

**FIG. 9**

**FIG. 10**

EP 2 754 921 A2

FIG. 11

19

FIG. 12

**FIG. 13**

**FIG. 14**

**FIG. 15**

FIG. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9915812 A
- JP 6185590 B
- US 6068564 A
- WO 9514183 A
- WO 2010053920 A2